(19) **Europäisches Patentamt**

**European Patent Office**

**Office européen des brevets**

(11) **EP 0 867 954 B1**

(12) **FASCICULE DE BREVET EUROPEEN**

(45) Date de publication et mention
de la délivrance du brevet:
**02.05.2001 Bulletin 2001/18**

(51) Int Cl.⁷: **H01M 2/32**, H01M 2/02

(21) Numéro de dépôt: **98400668.4**

(22) Date de dépôt: **23.03.1998**

(54) **Générateur électrochimique à boîtier isolé protégé contre la corrosion**

Elektrochemischer Generator mit korrosionsgeschütztem isoliertem Gehäuse

Electrochemical generator with a corrosion-protected insulated casting

(84) Etats contractants désignés:
**DE ES FI FR GB IE IT NL SE**

(30) Priorité: **24.03.1997 FR 9703543**

(43) Date de publication de la demande:
**30.09.1998 Bulletin 1998/40**

(73) Titulaire: **ALCATEL**
**75008 Paris (FR)**

(72) Inventeur: **Broussely, Michel**
**86240 Liguge (FR)**

(74) Mandataire: **Laroche, Danièle et al**
**COMPAGNIE FINANCIERE ALCATEL**
**Département Propriété Industrielle**
**30, avenue Kléber**
**75116 Paris (FR)**

(56) Documents cités:
**WO-A-95/13629** **US-A- 5 260 146**
**US-A- 5 328 780**

## Description

La présente invention concerne un générateur électrochimique comprenant dans un boîtier métallique au moins un couple électrochimique constitué d'un séparateur, d'une électrode positive d'un séparateur et d'une électrode négative, l'ensemble étant imprégné d'électrolyte, les électrodes de même nature étant réunies par des connexions assurant la mise en parallèle et la liaison avec deux bornes respectives de sortie de courant.

Très souvent, le boîtier d'un générateur, lorsqu'il est métallique, est utilisé pour constituer l'une des polarités.

Dans ce cas, il est une règle pour l'homme de l'art que le métal constituant ledit boîtier doit être chimiquement et électrochimiquement stable vis-à-vis de la solution électrolytique au potentiel qui lui est imposé par l'électrode constitutive du générateur, à laquelle il est relié.

Par exemple, il ne doit pas être oxydé lorsqu'il est porté au potentiel élevé de l'électrode positive.

Dans le cas des accumulateurs à forte densité d'énergie et à électrolyte non aqueux, les matériaux d'électrode positive peuvent être très oxydants. Par exemple, l'oxyde de manganèse lithié de forme spinelle $LiMn_2O_4$ doit être porté à un potentiel d'au moins 4,3 V par rapport à une électrode de lithium pour être suffisamment chargé. Les oxydes de cobalt ou nickel lithiés doivent être portés à 4,2 ou 4,1 V, respectivement, pour être chargés.

Par exemple dans ces conditions, le nickel, l'acier nickelé ou les aciers inoxydables portés à ces niveaux de potentiel dans un électrolyte non aqueux, constitué par des solvants comme les carbonates d'alkyle et un sel de lithium comme $LiPF_6$, $LiBF_4$, $LiClO_4$, $LiCF_3SO_3$ ou tout autre type de sel de lithium, sont oxydés électrochimiquement.

Des ions Ni, Fe, Cu passent en solution et vont avoir un effet très négatif sur la stabilité et l'autodécharge de l'accumulateur. De façon ultime, le boîtier sera percé, car la corrosion est en général sous forme de piqûre. Il convient par conséquent de sélectionner des métaux stables. Le seul connu à l'heure actuelle est l'aluminium qui est également utilisé pour constituer les collecteurs de courant des électrodes de ce type de générateur.

Par ailleurs, on peut choisir de connecter le boîtier à l'électrode négative. Dans ce cas, on devra également s'assurer qu'aucune réaction électrochimique parasite ne se produira à la surface du métal, porté au potentiel réducteur dans une solution électrolytique. Par exemple, dans le cas des accumulateurs à anode de lithium ou de matériau anodique d'insertion au lithium comme le carbone, ce potentiel est très réducteur vis-à-vis du solvant. Ce dernier réagit et donne naissance à la formation d'une couche ayant des propriétés de conduction ionique, à l'interface avec le métal.

Selon la nature du métal, cette couche peut-être plus ou moins passivante c'est-à-dire auto-inhibitrice vis-à-vis de la réaction. Si la passivation est insuffisante, la réaction de réduction de l'électrolyte par la matière active négative (Li ou composé d'insertion du lithium) va se poursuivre, entraînant une auto-décharge de l'élément. Ce phénomène est accentué si la température est augmentée.

Pour éviter ces contraintes, lorsque la configuration du générateur le permet, on peut mettre en place deux bornes de sorties isolées du boîtier ; on a alors un boîtier dont le potentiel est «flottant», non déterminé par le potentiel d'une électrode active. Cette configuration peut présenter par ailleurs un intérêt lorsque l'on désire éviter qu'une grande surface conductrice soit au potentiel de l'accumulateur comme par exemple le montage en série d'accumulateurs de forte capacité.

Cependant cette solution présente également un inconvénient : n'étant pas fixé par une électrode active, le potentiel peut prendre n'importe quelle valeur, à l'intérieur du domaine d'électroactivité de l'électrolyte. Ce dernier peut-être très important, dans le cas des accumulateurs à électrolyte non aqueux (pouvant aller jusqu'à 4 ou 5 volts).

Par conséquent, des impuretés présentes même en faible proportions dans l'électrolyte, pourront porter l'interface métal/électrolyte à un potentiel indésirable auquel peuvent se produire par exemple des réactions de dépassivation lorsqu'il s'agit d'un boîtier d'acier inoxydable, de nickel, d'aluminium ou de tout autre métal dont la stabilité est assurée par une couche d'oxyde passivant. Cette dépassivation peut ensuite s'accompagner de phénomènes de corrosion, notamment par piqûres.

D'une autre manière, des matières à caractère très réducteur peuvent agir à la surface du métal pour le dégrader. Ainsi en est-il de dépôts accidentels de lithium par croissance de dendrites à partir de l'électrode négative. Si le boîtier est en aluminium, un alliage de formule LiAl va se former, dégradant les propriétés mécaniques de l'aluminium et pouvant entraîner le percement du boîtier.

Pour remédier à ces problèmes, on a proposé des boîtiers réalisés dans des matériaux inattaquables, comme l'acier spécial divulgué dans la demande japonaise n° 241113 de 1993, ou dans le document FR-A-2 260 876. De tels matériaux sont coûteux et, par leur poids élevé, ils abaissent l'énergie massique.

Le but de l'invention est de proposer un générateur électrochimique à boîtier métallique dont les bornes positives et négatives sont isolées du boîtier, ne présentant pas de risques de corrosion et autres inconvénients précités.

L'invention consiste à introduire en contact électrique avec l'intérieur du boîtier d'une part et imprégnée d'électrolyte d'autre part, une électrode supplémentaire contenant une matière électrochimiquement active choisie de telle sorte que son potentiel électrochimique vis-à-vis de l'électrolyte soit dans le domaine de passivation et de stabilité du métal constituant le boîtier. Le potentiel d'interface de ce dernier avec l'électrolyte est ainsi fixé dans une plage où aucune réaction néfaste n'est à craindre.

L'électrode supplémentaire est avantageusement constituée d'un support d'aluminium recouvert partiellement de matière active, et soudé par ultra-sons sur une partie libre du boîtier par sa surface non recouverte.

De préférence, l'électrolyte est choisi parmi les électrolytes à solvant non aqueux.

Dans le cas d'un accumulateur classique prismatique, l'électrode supplémentaire est avantageusement disposée sur le fond du boîtier et séparée par un séparateur approprié du couple électrochimique. Il en est de même pour un accumulateur cylindrique, le couple électrochimique étant enroulé en spirale.

Connaissant les matériaux utilisés pour le boîtier et les électrodes, l'homme de métier connaît la fenêtre de potentiel dans laquelle doit se situer la matière de l'électrode supplémentaire pour conjurer les risques de corrosion. Ainsi dans le cas d'un boîtier en aluminium, on sait qu'il peut former un alliage lithium s'il est porté à un potentiel inférieur à environ 0,5 V par rapport au lithium dans la solution d'électrolyte d'un accumulateur à anode lithium-carbone, et qu'il peut être corrodé dans certains électrolytes s'il est porté à un potentiel supérieur à 4,3 V. Le choix pour l'électrode supplémentaire d'une matière dont le potentiel est intermédiaire entre ces valeurs est particulièrement adapté, par exemple une électrode de $LiV_2O_5$ (potentiel d'environ 2,5 volts).

Plus généralement, la matière destinée à l'électrode supplémentaire pourra avantageusement être un oxyde ou un sulfure métallique, lithié ou non, dont le potentiel par rapport au lithium se situe entre 2 et 3,5 V, comme par exemple $V_2O_5$, $Li_xV_2O_5$, $MnO_2$, $Li_xMnO_2$, $MoS_2$, $Li_xMoS_2$.

Avantageusement, l'électrode positive contient au moins un oxyde lithié d'un métal de transition, et l'électrode négative est choisi parmi les graphites et les carbones désordonnés graphitables ou non graphitables, et leurs mélanges.

Le potentiel de l'électrode supplémentaire peut être contrôlé périodiquement et réajusté par une simple recharge avec la cathode en connectant temporairement une résistance entre le boîtier et le pôle positif.

D'autres caractéristiques et avantages de l'invention ressortiront de la description ci-après de trois exemples non limitatifs de réalisation. On se référera aux dessins annexés sur lesquels :

- la figure 1 est une vue en perspective avec arrachement partiel d'un accumulateur prismatique auquel s'applique l'invention,

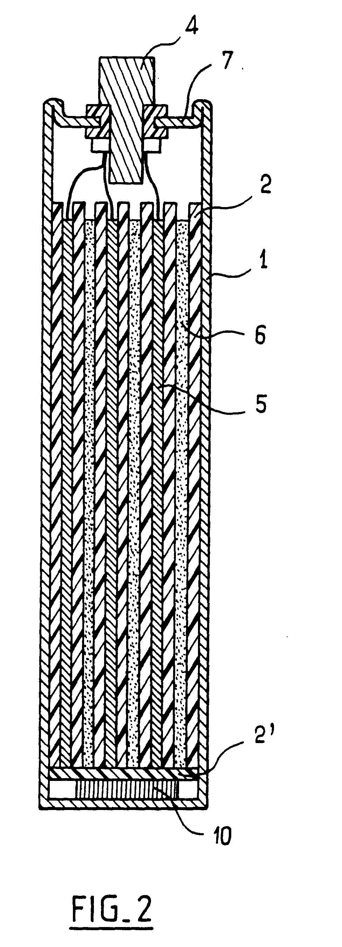

- la figure 2 est une vue en coupe verticale de l'accumulateur de la figure 1,

- la figure 3 montre en perspective l'électrode supplémentaire conforme à l'invention.

***Exemple 1 :***

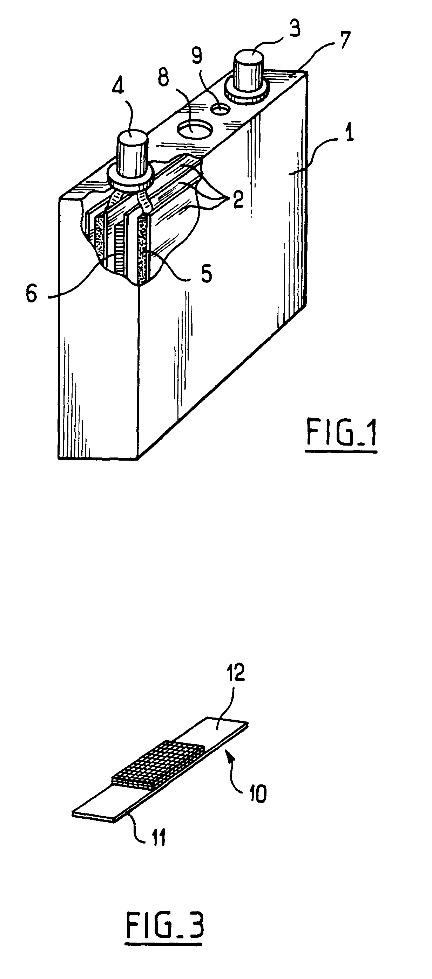

On réalise un petit accumulateur dans un boîtier prismatique 1 (cf. figure 1) ayant les dimensions suivantes : 15 x 50 x 100 mm.

Les matières actives des électrodes 5, 6 sont constituées par de l'oxyde de nickel lithié ($LiNiO_2$) pour la positive, et du lithium pour l'électrode négative.

Les électrodes positives 6 sont réalisées en appliquant un mélange de $LiNiO_2$ 90 %, 6 % de fluorure de polyvinylidène comme liant dissous dans la N méthyl pyrrolidonne, 2 % de noir de carbone et 2 % de graphite comme agents conducteurs, successivement sur les deux faces d'un feuillard d'aluminium. 1,85 g de ce mélange (poids sec) est utilisé pour réaliser une électrode 6 de 0,20 mm d'épaisseur et de dimensions 45 mm x 80 mm.

Les électrodes négatives 5 sont constituées par une feuille de lithium d'épaisseur 0,20 mm, munie de connexions en nickel pour relier les électrodes entre elles et à la borne négative 4.

Un empilement d'un séparateur 2, une électrode positive 6, un séparateur 2 et une électrode négative 5 constitue un couple électrochimique. Le séparateur 2 est une feuille de polypropylène microporeux. Un empilement de 28 de ces couples constitue la partie active de l'accumulateur décrit figure 1.

Les électrodes 5, 6 de même nature sont réunies par des connexions, assurant la mise en parallèle et la liaison avec chaque borne 4, 3 de sortie de courant. Ces bornes 4, 3 sont isolées du boîtier 1 avec une pièce isolante de polypropylène assurant également l'étanchéité.

Le boîtier de forme prismatique 1 est réalisé en aluminium. Le dispositif selon l'invention est constitué d'une électrode 10 de faibles dimensions connectée au fond du boîtier 1, et couverte d'un séparateur 2'.

Cette électrode 10 est réalisée de la manière suivante :

- un mélange d'oxyde de vanadium $V_2O_5$ (86 %), de fluorure de polyvinylidène (10 %), de graphite (2 %) et de noir d'acétylène (2 %) est déposé sur une face d'un feuillard d'aluminium 11. 70 mg de ce mélange sont utilisés pour réaliser une électrode 10 de dimensions 35 x 10 mm, laissant ainsi une partie 12 de sa surface non recouverte de matière active. Cette partie est utilisée pour souder par ultra-sons cette électrode 10 dans le fond du boîtier 1 d'aluminium, avant l'introduction du faisceau d'électrodes 5, 6.

Après introduction du faisceau d'électrode 5, 6, le boîtier 1 est refermé par son couvercle 7, comportant les bornes de sortie 3, 4, un dispositif de sécurité constitué d'une soupape de sécurité 8 et un trou 9 de remplissage de l'électrolyte. L'électrolyte, constitué par une solution molaire de $LiPF_6$, dans un mélange de solvants réalisé avec le carbonate de diméthyle, le carbonate de propylène et le carbonate d'éthylène dans les proportions volumiques respectives de 60 %, 20 %, 20 %.

Le générateur ainsi constitué est soumis à une charge, à un courant de 0,5 A jusqu'à une tension de 4,1 V au cours de laquelle la matière positive subit la transformation suivante :

$$LiNiO_2 \rightarrow Li_{(1-x)}NiO_2 + xLi^+ + xe^-$$

L'électrode négative s'enrichit en lithium suivant :

$$xLi^+ + xe^- \rightarrow xLi$$

La quantité d'électricité mise en jeu, rapportée à la masse de matière active positive introduite, permet de calculer la composition du matériau à l'état chargé.

Dans ce cas, on obtient : $Li_{0,35}NiO_2$

Après un repos d'une heure, les différences de potentiel de chacune des électrodes par rapport à une autre sont mesurées à courant nul. On note les valeurs suivantes :

| +/- | 4,060 V |
|---|---|
| + /BOÎTIER | 0,610 V |
| BOITIER/- | 3,450 V |

On observe donc que le potentiel du boîtier se situe à une valeur 3,45 V par rapport à l'électrode de lithium (prise égale à 0V comme référence). Dans cette zone, la stabilité de l'aluminium est très bonne et aucune corrosion n'est à craindre. Ce potentiel est celui déterminé par l'électrode d'oxyde de vanadium $V_2O_5$.

L'accumulateur a été placé ensuite en stockage pendant 2 semaines à 45°C puis le potentiel des électrodes est mesuré à nouveau (tableau 2).

| +/- | 4,030 V |
|---|---|
| +/BOÎTIER | 0,580 V |
| BOITIER/- | 3,450 V |

On observe que la force électromotrice de l'accumulateur a diminué faiblement (-30 mV). Toutefois, on observe que le potentiel du boîtier par rapport au lithium n'a pas varié, assurant ainsi toujours une bonne stabilité vis-à-vis de la corrosion.

La baisse de la force électromotrice de l'accumulateur (+/-) est donc due à une diminution du potentiel de l'électrode positive, elle même due à une réduction très partielle de la matière active par l'électrolyte.

En effet, le potentiel de l'électrode de $Li_{(1-x)}NiO_2$ est fonction de sont état de charge. Elle varie quasi continuellement d'environ 4,06 à l'état chargé ($Li_{0,35}NiO_2$) à environ 3,60 V à l'état déchargé ($Li_{0,85}NiO_2$).

### Exemple 2

L'électrode positive est la même que dans l'exemple n° 1.

L'électrode négative est fabriquée selon un procédé identique à celui de l'électrode positive. Un mélange constitué de 90 % de graphite et 10 % de liant fluorure de polyvinylidène est appliqué sur les deux faces d'un feuillard de cuivre. 1,15 g de ce mélange sont utilisés pour constituer une électrode de dimensions 48 mm x 82 mm, et d'épaisseur 0;23 mm.

Un empilement d'un séparateur, une électrode positive, un séparateur et une électrode négative constitue un couple électrochimique. Le séparateur est une feuille de polypropylène microporeux. Un empilement de 26 de ces couples constitue la partie active de l'accumulateur.

Le boîtier de forme prismatique, est réalisé en aluminium. l'électrode auxiliaire d'oxyde de vanadium, dispositif selon l'invention, est identique à celle décrite dans l'exemple précédent, et placée de la même manière dans l'accumulateur.

L'accumulateur est terminé puis rempli avec le même électrolyte que celui décrit dans l'exemple 1.

Le générateur ainsi constitué est soumis à une première charge à un courant constant de 0,5 A, jusqu'à ce que la différence de potentiel entre les deux bornes soit égale à 4,0 V.

Au cours de cette charge, les matériaux subissent une transformation réversible selon : (pour une mole de $LiNiO_2$ associée à y moles de carbone) :

$$positive : LiNiO_2 \rightarrow Li_{(1-x)}NiO_2 + xLi^+ + xe^-$$

$$négative : yC + xLi^+ + xe^- \rightarrow C_yLi_x$$

Lorsque l'accumulateur est complètement chargé jusqu'à 4,0 V, on peut calculer x à partir de la quantité d'électricité mise en jeu et des masses respectives de chaque matière active.

Dans cet exemple, on obtient pour la positive x = 0,65, soit $Li_{0,35}NiO_2$. La quantité de lithium inséré par atome de carbone dans l'électrode négative est variable en fonction de la quantité de graphite utilisée y, et dépend de la consommation du lithium pour former une couche passivante sur le carbone, qui est fonction du carbone utilisé. Elle est inférieure ou égale à 1 atome de lithium pour 6 atomes de carbone, soit $LiC_6$.

Après une période de repos d'une heure, les différences de potentiel entre les électrodes sont mesurées. On obtient les résultats décrits dans le tableau 3 :

Tableau 3

| +/- | 3,96 V |
|---|---|
| +/boîtier | 0,61 V |
| boîtier/- | 3,35 V |

On observe donc que le potentiel du boîtier est intermédiaire entre l'électrode positive et l'électrode négative.

On observe que la différence de potentiel entré le boîtier et l'électrode positive est la même que dans l'exemple 1, valeur pour laquelle le boîtier est protégé contre l'oxydation.

Par contre, le potentiel par rapport à la négative est inférieur de 0,1 V par comparaison à l'exemple n° 1, de même que la différence de potentiel entre les deux bornes. Ceci indique, ce qui est conforme à la théorie, que le potentiel de l'électrode de graphite lithié $Li\,C_6$ a un potentiel de 0,1 V par rapport à une électrode de lithium.

L'accumulateur est ensuite stocké pendant deux semaines à 45°C, puis les potentiels sont mesurés à nouveau.

Tableau 4

| +/- | 3,93 V |
|---|---|
| +/boîtier | 0,58 V |
| boîtier/- | 3,35 V |

Comme dans l'exemple n° 1, on observe une décroissance due à une légère réduction de la matière active positive. Le potentiel du boîtier par rapport à la négative n'a pas varié, ce qui indique que, comme dans l'exemple 1, le potentiel du boîtier n'a pas changé, de même que celui de l'électrode négative, dont le potentiel ne varie pas avec l'état de charge dans un petit domaine.

### *Exemple 3*

On réalise un générateur en tous points identique à l'exemple 2, sauf en ce qui concerne la nature du composé utilisé pour constituer l'électrode de protection couplée au boîtier. Celle-ci comprend du dioxyde de manganèse $MnO_2$, obtenu par chauffage de $MnO_2$ EMD (dioxyde de manganèse électrolytique), pendant 5 heures à 350°C, pour obtenir le matériau classique utilisé dans les piles au lithium, en remplacement de l'oxyde de vanadium $V_2O_5$. L'électrode est constituée par 70 mg d'un mélange de 80 % de $MnO_2$, 8 % de liant, 5 % de noir de carbone et 5 % de graphite, pour constituer une électrode de 35 mm x 10 mm, d'épaisseur 0,17 mm. L'accumulateur est fabriqué et chargé dans les mêmes conditions que celles décrites dans l'exemple n° 2. Après une heure de repos, les différences de potentiel des électrodes sont mesurées, et décrites dans le tableau n° 5.

Tableau 5

| +/- | 3,96 V |
|---|---|
| +/boîtier | 0,71 V |
| boîtier/- | 3,25 V |

On observe que la différence de potentiel entre les bornes est identique à celle de l'exemple 2, ce qui est normal puisque les électrodes sont identiques. Par contre le potentiel du boîtier, fixé par l'électrode selon l'invention, est dans ce cas un peu inférieure, de 0,1 V par rapport à l'électrode négative. Connaissant le potentiel de l'électrode négative qui est de 0,1 V par rapport au lithium, on peut en déduire que le potentiel du boîtier est de 3,35 V par rapport au lithium, qui est un domaine ou aucune corrosion n'est à craindre pour le boîtier.

Après stockage de deux semaines à 45°C, les valeurs mesurées ont évolué selon le tableau 6 :

Tableau 6

| +/- | 3,93 V |
|---|---|
| +/boîtier | 0,73 V |
| boîtier/- | 3,20 V |

On observe que le potentiel du boîtier par rapport à l'électrode négative a diminué de 0,05 volts environ, ce qui indique que le potentiel de l'électrode selon l'invention a baissé de cette valeur, pour atteindre 3,3 V par rapport au lithium. Ceci n'est aucunement gênant pour l'effet recherché, car le risque de corrosion n'est augmenté qu'avec une augmentation du potentiel. La cause en est que le potentiel à courant nul d'une électrode de bioxyde de manganèse dépend de son état de décharge, au début de la décharge, comme le montrent les courbes de décharge des piles connues $Li/MnO_2$. Celui-ci, comme le $Li_{0,35}NiO_2$, est légèrement réduit par l'électrolyte pendant le stockage.

Ces exemples ne sont pas limitatifs. Par exemple, d'autres matériaux pour comme $LiCoO_2$ ou $LiMn_2O_4$ peuvent être utilisés pour l'électrode positive, ou d'autres types de carbones, comme les cokes ou les carbones non graphitables pour l'électrode négative, sans sortir du cadre de l'invention.

### Revendications

1. Générateur électrochimique comprenant dans un boîtier métallique (1) au moins un couple électrochimique constitué d'un séparateur (2), d'une électrode positive (6), d'un séparateur (2) et d'une électrode négative (5), l'ensemble étant imprégné d'électrolyte, les électrodes de même polarité étant réunies par des connexions assurant la mise en parallèle et la liaison avec deux bornes (3, 4) de sortie de courant respectivement positive et négative, isolées du boîtier (1), caractérisé en ce qu'il comporte une électrode supplémentaire (10) en contact électrique avec le boîtier (1) et imprégnée d'électrolyte, contenant une matière électrochimiquement active choisie de telle sorte que son potentiel électrochimique vis-à-vis de l'électrolyte soit dans le domaine de passivation et de stabilité du métal constituant le boîtier (1).

2. Générateur selon la revendication 1, caractérisé en ce que le boîtier (1) est en aluminium.

3. Générateur selon l'une des revendications 1 et 2, caractérisé en ce que l'électrode supplémentaire (10) est constituée par un support d'aluminium (11) recouvert partiellement de matière active, et soudé par ultra-sons sur une partie libre du boîtier (1) par sa surface non recouverte (12).

4. Générateur selon l'une des revendications précédentes caractérisé en ce que ledit électrolyte est choisi parmi les électrolytes à solvant non aqueux.

5. Générateur selon la revendication 4, caractérisé en ce que l'électrode supplémentaire (10) est dans une matière choisie parmi un oxyde ou un sulfure métallique lithié ou non, dont le potentiel par rapport au lithium se situe entre 2 et 3,5 V, comme par exemple $V_2O_5$, $Li_xV_2O_5$, $MnO_2$, $Li_xMnO_2$, $MoS_2$, $Li_xMoS_2$.

6. Générateur selon l'une des revendications 4 et 5, caractérisé en ce que l'électrode positive (6) contient au moins un oxyde lithié d'un métal de transition et l'électrode négative (5) est choisie parmi les graphites et les carbones désordonnés graphitables ou non graphitables, et leurs mélanges.

7. Générateur selon l'une des revendications précédentes, caractérisé en ce que ladite électrode supplémentaire (10) est disposée sur le fond du boîtier (1) et séparée par un séparateur (2') dudit couple électrochimique.

8. Générateur selon l'une des revendications précédentes, caractérisé en ce qu'il s'agit d'un générateur électrochimique de forme prismatique.

9. Générateur selon l'une des revendications là 6, caractérisé en ce qu'il s'agit d'un générateur électrochimique de forme cylindrique dans lequel un couple électrochimique, constitué d'une électrode positive, d'une électrode négative et de deux séparateurs, est enroulé en spirale.

**Patentansprüche**

1. Elektrochemischer Generator mit wenigstens einem elektrochemischen Paar in einem metallischen Gehäuse, das aus einem Scheider (2), einer positiven Elektrode (6), einem Scheider (2) und einer negativen Elektrode (5) gebildet ist, wobei die Anordnung in Elektrolyt getränkt ist und die Elektroden gleicher Polarität durch Anschlüsse verbunden sind, wodurch diese parallel geschaltet und mit zwei, vom Gehäuse (1) isolierten, jeweils positiven und negativen Stromausgangsklemmen (3, 4) verbunden sind, dadurch gekennzeichnet, dass er eine zusätzliche Elektrode (10) aufweist, die in elektrischen Kontakt mit dem Gehäuse (1) steht und in Elektrolyt getränkt ist und ein elektrochemisch aktives Material enthält, das so gewählt ist, dass sein elektrochemisches Potential in Bezug auf den Elektrolyten im Bereich der Passivierung und Stabilität des das Gehäuse (1) bildenden Metalls ist.

2. Generator nach Anspruch 1, dadurch gekennzeichnet, dass das Gehäuse (1) aus Aluminium besteht.

3. Generator nach einem der Ansprüche 1 und 2, dadurch gekennzeichnet, dass die zusätzliche Elektrode (10) aus einem teilweise mit aktiven Material bedeckten Aluminiumträger (11) gebildet ist und durch Ultraschall mit ihrer nicht bedeckten Fläche (12) auf einen freien Teil des Gehäuses (1) geschweißt ist.

4. Generator nach einem der vorhergehenden Ansprüche, dadurch gekennzeichnet, dass der Elektrolyt aus den Elektrolyten mit nichtwässrigem Lösungsmittel gewählt ist.

5. Generator nach Anspruch 4, dadurch gekennzeichnet, dass die zusätzliche Elektrode (10) aus einem Material besteht, das aus einem metallischen Oxid oder Sulfid, gegebenenfalls in Verbindung mit Lithium, gewählt ist, dessen Potential in Bezug auf Lithium zwischen 2 und 3,5 V beträgt, wie zum Beispiel $V_2O_5$, $Li_xV_2O_5$, $MnO_2$, $Li_xMnO_2$, $MoS_2$, $Li_xMoS_2$.

6. Generator nach einem der Ansprüche 4 und 5, dadurch gekennzeichnet, dass die positive Elektrode (6) wenigstens ein Lithiumoxid eines Übergangsmetalls aufweist und die negative Elektrode (5) aus den Graphiten und den graphitierbaren oder nicht graphitierbaren ungeordneten Kohlenstoffen, und deren Mischungen, gewählt ist.

**7.** Generator nach einem der vorhergehenden Ansprüche, dadurch gekennzeichnet, dass die genannte zusätzliche Elektrode (10) auf dem Boden des Gehäuses (1) angeordnet und vom genannten elektrochemischen Paar über einen Scheider (2') getrennt ist.

**8.** Generator nach einem der vorhergehenden Ansprüche, dadurch gekennzeichnet, dass es sich um einen elektrochemischen Generator in prismatischer Form handelt.

**9.** Generator nach einem der Ansprüche 1 bis 6, dadurch gekennzeichnet, dass es sich um einen elektrochemischen Generator in zylindrischer Form handelt, in dem ein aus einer positiven Elektrode, einer negativen Elektrode und zwei Scheidern gebildetes elektrochemisches Paar spiralig eingerollt ist.

**Claims**

**1.** An electrical storage battery comprising in a metallic casing (1) and impregnated with electrolyte at least one electrode pair comprising a separator (2), a positive electrode (6), a separator (2) and a negative electrode (5), electrodes of the same polarity being connected in parallel and to positive and negative output terminals (3, 4) insulated from said casing (1), characterized in that it includes an additional electrode (10) in electrical contact with said casing (1) and impregnated with electrolyte, said electrolyte containing an electrochemically active material chosen so that its electrochemical potential relative to the electrolyte is in the range passivating and stabilizing the metal of the casing (1).

**2.** The battery according to claim 1, characterized in that the casing (1) is made of aluminium.

**3.** The battery according to claim 1 or claim 2, characterized in that the additional electrode (10) comprises an aluminium support (11) partly covered with active material and ultrasonically welded to an exposed surface (12) of a free part of said casing (1).

**4.** The battery according to any of the preceding claims, characterized in that the electrolyte is a non-aqueous solvent electrolyte.

**5.** The battery according to claim 4, characterized in that the additional electrode (10) is made from a material selected from a metallic oxide or sulphide, containing lithium or not, the potential of which relative to lithium is in the range 2 V to 3.5 V, for example $V_2O_5$, $Li_xV_2O_5$, $MnO_2$, $Li_xMnO_2$, $MoS_2$, $Li_xMoS_2$.

**6.** The battery according to claim 4 or claim 5, characterized in that the positive electrode (6) contains at least one lithium-containing oxide of a transition metal and the material of the negative electrode (5) is chosen from graphites, disordered carbons that can be graphitized or not and mixtures thereof.

**7.** The battery according to any of the preceding claims, characterized in that said additional electrode (10) is disposed on the bottom wall of the casing (1) and separated from said electrode pair by a separator (2').

**8.** A battery according to any of the preceding claims, characterized in that it is prism-shaped.

**9.** A battery according to any of claims 1 to 6, characterized in that it is cylindrical and includes an electrode pair consisting of a positive electrode, a negative electrode and two separators wound in a spiral.

FIG.1

FIG.3

## FIG. 2